# DEMANDE DE BREVET EUROPEEN

(11) **EP 0 965 482 A1**
(43) Date de publication de la demande: **22.12.1999**
(21) Numéro de dépôt: 99401463.7
(22) Date de dépôt: 15.06.1999
(51) Int. Cl.: B60N 2/48

(54) **Dispositif de blocage en hauteur d'un appui-tête notamment pour siège de véhicule automobile**

(30) Priorité: 15.06.1998 FR 9807487
(71) Demandeur: CENTRE D'ETUDES ET RECHERCHE POUR L'AUTOMOBILE ( CERA), F-51100 Reims (FR)
(72) Inventeur: Le Gall, Francois, 02130 Coulonges Cohan (FR); Etting, Bruno, 92310 Sevres (FR)
(74) Mandataire: Geismar, Thierry

(57) **Abrégé**

L'invention concerne un dispositif de blocage en hauteur d'un appui-tête de siège comprenant au moins une broche engagée dans une douille (1) solidaire de la structure du siège.

Ce dispositif comprend un fourreau (2) disposé dans la douille pour recevoir la broche. Le fourreau comporte au moins une zone centrale déformable (11) susceptible d'exercer sur la broche un effort de serrage fonction de la position angulaire relative de ses zones d'extrémité, et des moyens de commande (13, 13', 14, 14') pour faire varier cette position angulaire relative en réponse à un déplacement de la broche dans un plan sensiblement parallèle au plan axial du siège

Application aux sièges de véhicules automobiles.

## Description

La présente invention concerne un dispositif de blocage en hauteur d'un appui-tête, notamment pour siège de véhicule automobile, et plus particulièrement d'un tel appui-tête du type comprenant au moins une broche engagée dans une douille solidaire de la structure dudit siège.

Les appuis-tête utilisés dans l'industrie automobile comprennent de façon connue un coussin d'appui monté à l'extrémité supérieure de deux broches dont l'autre extrémité pénètre dans le dossier du siège. Lorsque ces appuis-tête sont réglables en hauteur, les broches sont généralement montées coulissantes dans des douilles solidaires de l'armature du siège.

Ces broches comportent alors souvent des crans de blocage coopérant avec des doigts escamotables commandables par l'utilisateur pour bloquer l'appui-tête en hauteur dans un certain nombre de positions possibles. On notera que ces crans provoquent des amorces de rupture, une rupture des broches pouvant donc survenir en cas de choc violent. En outre, ces crans ne permettent un réglage que dans un nombre de positions équivalent à celui des crans. Un réglage continu sans cran est donc préférable.

Les appuis-tête des véhicules automobiles ont bien évidemment pour fonction de procurer un confort aux passagers, mais plus encore d'assurer leur sécurité. En effet, lors d'un choc par l'arrière du véhicule, le corps de l'occupant est soumis à une accélération qui le plaque au dossier du siège. On constate alors que la composante verticale de l'effort exercé par la tête de cet occupant sur le coussin de l'appui-tête tend généralement, pour des raisons bio-mécaniques, à enfoncer l'appui-tête dans le dossier du siège. On comprend alors que si le réglage en hauteur n'est pas assez ferme, rien n'empêche la tête de l'occupant de partir en arrière, ce qui peut provoquer de graves lésions cervicales.

De plus, lors de chocs frontaux, les appuis-tête ont tendance à monter sous la force centrifuge induite par le basculement rapide des dossiers de siège vers l'avant. Cet effet peut aller jusqu'à l'éjection des appuis-tête. Il est donc important de maintenir également fermement l'appui-tête lors de chocs frontaux.

Dans les mêmes circonstances, la tête d'un occupant arrière peut venir heurter de bas en haut l'appui-tête du siège se trouvant devant lui et ainsi le dérégler.

Enfin, en cas de collision en chaîne, un choc avant est souvent suivi d'un choc arrière. Les divers effets mentionnés ci-dessus sont alors cumulés.

Par ailleurs, et pour en revenir à la fonction de confort de l'appui-tête, il faut qu'il soit aisément réglable en hauteur. En particulier, il est souhaitable que l'utilisateur n'ait pas à exercer un effort de réglage aussi important que celui qui est nécessaire pour enfoncer l'appui-tête par un choc exercé de haut en bas ou d'une manière générale, que celui auquel l'appui-tête doit résister en cas de collision, afin de ne pas se dérégler.

Enfin, il doit être tenu compte du fait que, pour des raisons de symétrie des efforts et afin d'éviter un coincement de l'appui-tête lors de son réglage en hauteur, l'utilisateur doit, lorsqu'il est assis sur le siège, effectuer ce réglage à l'aide de ses deux mains. Ceci rend particulièrement peu recommandable tout système nécessitant l'usage d'un organe de réglage tel qu'un bouton ou une mollette.

La présente invention vise à pallier ces inconvénients. Plus particulièrement, l'invention vise à fournir un dispositif de montage et de blocage en hauteur d'un appui-tête, notamment de siège de véhicule automobile, qui permette un réglage aisé et continu par l'utilisateur installé sur le siège et assure un blocage en hauteur efficace en utilisation normale et surtout en cas d'accident.

A cet effet, l'invention a pour objet un dispositif de blocage en hauteur d'un appui-tête de siège, notamment de véhicule automobile, ledit appui-tête comprenant au moins une broche engagée dans une douille solidaire de la structure dudit siège, caractérisé par le fait qu'il comprend un fourreau disposé dans ladite douille pour recevoir ladite broche, ledit fourreau comportant au moins une zone centrale déformable susceptible d'exercer sur la broche un effort de serrage fonction de la position angulaire relative de ses zones d'extrémité, et des moyens de commande pour faire varier ladite position angulaire relative en réponse à un déplacement de la broche dans un plan sensiblement parallèle au plan axial dudit siège.

Il est ainsi possible de prévoir, en fonctionnement normal, un effort de serrage permettant de maintenir la position en hauteur choisie par l'utilisateur. Dans une position avancée de l'appui-tête entraîné volontairement par l'utilisateur, l'effort de serrage est réduit pour permettre le réglage en hauteur de l'appui-tête. Enfin, dans une position encore plus avancée ou dans une position reculée provoquée par un choc avant ou arrière respectivement, l'effort de serrage peut être considérablement augmenté pour assurer la sécurité de l'utilisateur.

Dans un mode de réalisation particulier, ledit fourreau est monté dans ladite douille rotatif dans ledit plan.

Ainsi, lorsque le coussin de l'appui-tête est soumis à un effort vers l'avant ou vers l'arrière, il entraîne une rotation de ses broches de support, ce mouvement provoquant à son tour une modification de l'effort de serrage.

Dans un autre mode de réalisation particulier, ledit fourreau est monté dans ladite douille avec un jeu en translation dans ledit plan.

Dans ce cas, le fourreau est simplement entraîné par la broche qui est elle montée pivotante.

Egalement dans un mode de réalisation particulier, ladite zone centrale comprend un ressort hélicoïdal.

Dans ces conditions, une modification de la position angulaire relative des zones d'extrémité du fourreau provoquent une modification de la torsion du ressort qui, de manière connue, provoque une augmentation ou une diminution de son diamètre et donc de l'effort de serrage qu'il exerce sur la broche.

Plus particulièrement, ledit fourreau peut être réalisé en matière plastique injectée, ladite zone centrale formant une bande de matière enroulée en hélice.

Avantageusement, au moins une desdites zones d'extrémité comprend des moyens d'engrènement agencés pour coopérer avec au moins une crémaillère solidaire de ladite douille.

Dans ce cas, un mouvement de translation ou de rotation de la broche et donc du fourreau, dans le plan précité, provoquera, par coopération des moyens d'engrènement avec la crémaillère, une rotation de la zone d'extrémité portant ces moyens d'engrènement et donc, une modification de la position angulaire relative de ses zones d'extrémité.

Les moyens d'engrènement et la crémaillère peuvent comprendre très simplement deux paires de butées agencées pour coopérer en sens inverse.

Ainsi, par coopération des butées de l'une ou l'autre paire, on pourra provoquer un déplacement angulaire de la zone d'extrémité dans le même sens, quel que soit le sens de déplacement du fourreau dans le plan précité.

Dans un mode de réalisation particulier, des moyens élastiques sont prévus pour presser ledit fourreau contre une butée de la douille, agencée pour, en réaction, donner une valeur prédéterminée de fonctionnement normal à ladite position angulaire relative.

Egalement dans un mode de réalisation particulier, des moyens de butée escamotables sont prévus pour ledit fourreau, correspondant à une position de réglage à l'écart d'une position de fonctionnement normal.

L'utilisateur pourra donc, en tirant sur l'appui-tête, l'amener dans cette position de butée où l'effort de serrage est pratiquement nul et où le réglage peut donc être effectué sans difficulté. Un effort vers l'avant plus important, provoqué par exemple par un choc frontal, provoque l'escamotage de la butée et le serrage de la broche.

On décrira maintenant, à titre d'exemple non limitatif, deux modes de réalisation particuliers de l'invention, en référence aux dessins annexés dans lesquels:
- la figure 1 est une vue éclatée en perspective d'un dispositif selon un premier mode de réalisation de l'invention ;
- la figure 2 est une vue partielle en coupe axiale de ce dispositif ;
- la figure 3 est un schéma en coupe transversale de ce dispositif en fonctionnement normal;
- les figures 4a, 4b et 4c sont des vues similaires à la figure 3, respectivement en position de réglage, en position de choc arrière et en position de choc avant ;
- la figure 5 est également un schéma en coupe transversale dans un autre plan;
- la figure 6 est un diagramme illustrant la variation de l'effort de serrage en fonction de l'angle de déplacement de l'appui-tête;
- la figure 7 est une vue éclatée en perspective d'un dispositif selon un deuxième mode de réalisation de l'invention ; et
- la figure 8 est une vue en perspective illustrant le dispositif de la figure 7 en utilisation.

Le dispositif selon l'invention, se compose d'une douille 1, d'un fourreau 2, d'un ressort 3 et d'un clip 4.

La douille 1 a pour fonction de recevoir le fourreau 2. Cette douille 1 comprend à sa partie inférieure des moyens 5 de clipsage sur la structure du dossier d'un siège d'automobile.

La partie inférieure de la douille 1 comprend en outre un logement sphérique 6 permettant de recevoir la partie inférieure également sphérique 7 du fourreau. Le logement 6 de la douille 1 et la partie inférieure sphérique 7 du fourreau comportent par ailleurs des méplats 8 et 9 respectivement, de manière à empêcher tout mouvement de pivotement autour de son axe de cette partie inférieure du fourreau, ainsi que tout basculement du fourreau dans un plan autre que le plan vertical parallèle à l'axe du véhicule. Par conséquent, seule la partie supérieure du fourreau 7 est susceptible de se déplacer par rapport à la douille 1 vers l'avant ou l'arrière du véhicule (flèches AV et AR sur les figures) et de pivoter autour de son axe.

La partie centrale du fourreau 2 est constituée par un tube dans la paroi duquel est découpée une hélice 10, cette partie centrale constituant par conséquent un ressort hélicoïdal 11 constitué par une bande de matière plastique enroulée en hélice autour de son axe.

La partie supérieure 12 du fourreau 2 porte deux butées 13 et 13', diamétralement opposées, et faisant face, vers l'avant pour la butée 13 et vers l'arrière pour la butée 13'.

Les butées 13 et 13' sont agencées pour coopérer avec des butées similaires 14 et 14', formées à la partie supérieure de la douille 1. La butée 14 fait donc face vers l'arrière du véhicule et de la butée 14' vers l'avant.

La douille 1 reçoit également le ressort 3 à son intérieur.

Ce ressort 3 est constitué par une lame métallique dont la partie inférieure 15 est en appui sur une languette 16 découpée dans la partie inférieure tubulaire du fourreau 2 du côté de l'avant du véhicule. La partie supérieure du ressort 3 est munie de deux crochets 16 engagés dans des doigts 17 du clip 4. Le clip 4 forme en outre un anneau ouvert 18, susceptible de s'engager dans une rainure 19 formée dans le fourreau 2 au-dessus des butées 13 et 13'.

Par ailleurs, la partie centrale du ressort 3 forme un coude 20 en appui contre la paroi interne avant de la douille 1. Par conséquent, lorsqu'une broche d'appui-tête est engagée dans le fourreau 2 et empêche donc la languette 16 de céder sous l'action du ressort 3, ce dernier pousse la partie supérieure du fourreau 2 vers l'arrière, amenant ainsi les butées 13' et 14' en contact.

Le contact entre ces butées provoque donc un couple sur la partie supérieure du fourreau 2, ce couple étant repris par la partie centrale hélicoïdale 11 de ce fourreau . La pression du ressort 3 est déterminée de sorte que le couple précité donne un effort de serrage convenable de la partie centrale 11 du fourreau 2 sur une broche d'appui-tête engagée dans ce fourreau.

Enfin, la douille 1 porte à sa partie supérieure une collerette 21 ouverte vers l'arrière. La partie arrière de cette collerette délimite un espace dans lequel peut se déplacer une partie cylindrique 22 de la partie supérieure du fourreau 2. Toutefois, la partie avant de la collerette 21 se resserre pour former deux surfaces de butée 23, empêchant le fourreau 2 de venir se loger, en fonctionnement normal, entre les parois avant de la collerette 21.

On a vu précédemment qu'en fonctionnement normal, le serrage de la broche de l'appui-tête est obtenu à l'aide du ressort 3 par l'intermédiaire de la réaction entre les butées 13' et 14'.

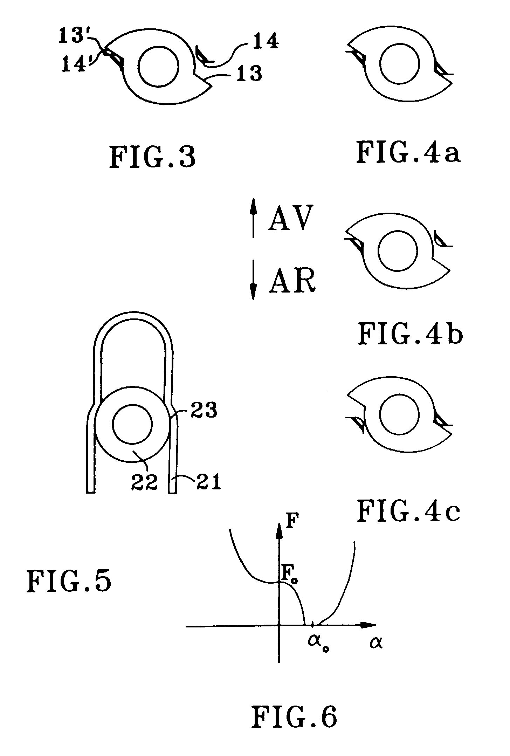

Lorsque l'utilisateur souhaite régler la hauteur de son appui-tête, il le tire vers l'avant jusqu'à ce que la partie 22 du fourreau 2 vienne au contact des butées 23, contre l'action du ressort 3. Les butées 13 et 14 sont alors dans la configuration représentées à la figure 4a, aucune des butées 13, 13' n'étant en contact avec les butées 14, 14'. Par conséquent, aucun couple n'est exercé sur la partie supérieure du fourreau 2 qui n'exerce donc plus d'effort de serrage sur la broche.

Si l'effort qui a porté l'appui-tête vers l'avant n'est pas dû à une sollicitation normale de l'utilisateur, mais par exemple à un passager arrière qui se trouverait propulsé vers l'avant du véhicule lors d'un choc frontal, cet effort est alors suffisant pour écarter les butées 23 de la collerette 21 et permettre un déplacement angulaire vers l'avant supplémentaire du fourreau 2. Les butées 13 et 14 viennent alors en contact comme représenté à la figure 4c, provoquant de nouveau un couple de rotation de la partie supérieure du fourreau 2. Ce couple entraîne de nouveau un serrage de la broche par la partie centrale 11 du fourreau, ce serrage étant d'autant plus fort que le déplacement vers l'avant est important.

Enfin, si l'on revient dans la position de fonctionnement normal et qu'un choc sur l'arrière du véhicule amène l'appui-tête au contact de la tête du passager avec suffisamment de violence, le fourreau 2 bascule vers l'arrière pour venir dans la position représentée à la figure 4b. Le contact des butées 13' et 14' entraîne une torsion supplémentaire de la partie centrale 11 du fourreau 2 et donc une augmentation du couple de serrage de la broche de l'appui-tête.

On a représenté à la figure 6 la valeur de l'effort de serrage du fourreau 2 sur la broche en fonction de l'angle α d'inclinaison du fourreau 2 dans la douille 1. La position α = 0° est la position de fonctionnement normal avec un effort nominal de serrage égal à F₀

La position de réglage correspond à une plage angulaire centrée autour de la valeur α_{*0*}. Sur cette plage, l'effort de serrage est nul.

Enfin, lorsque l'angle α dépasse cette plage centrée sur α_{*0*} , après écartement des butées 23, l'effort de serrage augmente très rapidement pour bloquer l'appui-tête.

De même, pour des angles α négatifs, correspondant à un basculement du fourreau vers l'arrière, l'effort de serrage augmente également très rapidement.

On observera que l'effort de serrage augmente également lorsque l'appui-tête est enfoncé sans avoir été préalablement amené dans sa position de réglage. En effet, la partie centrale 11 du fourreau 2 a tendance à diminuer de diamètre lorsqu'une traction différentielle est exercée sur ses extrémités.

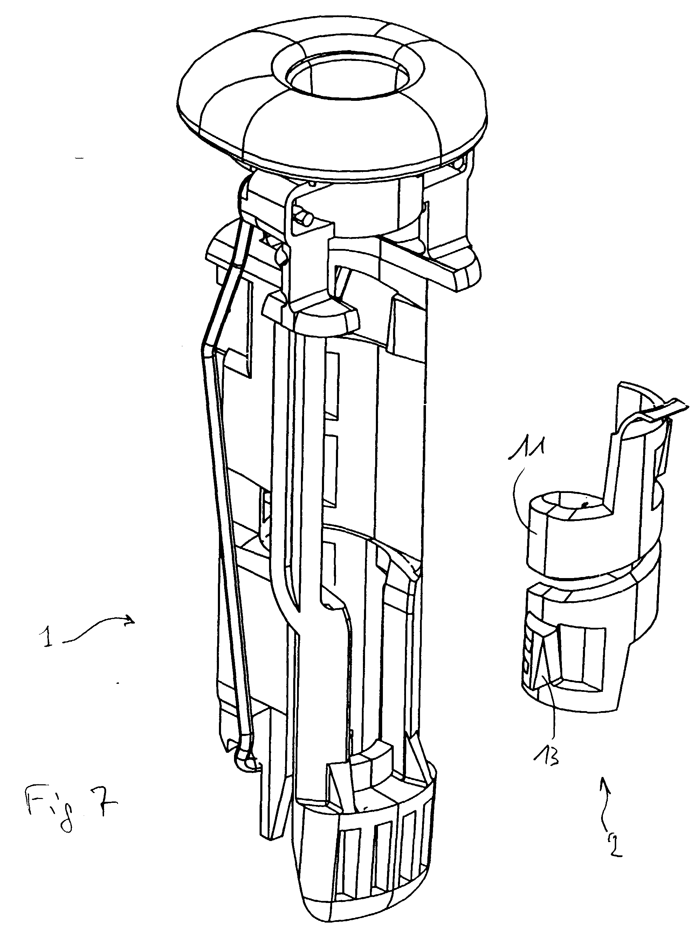

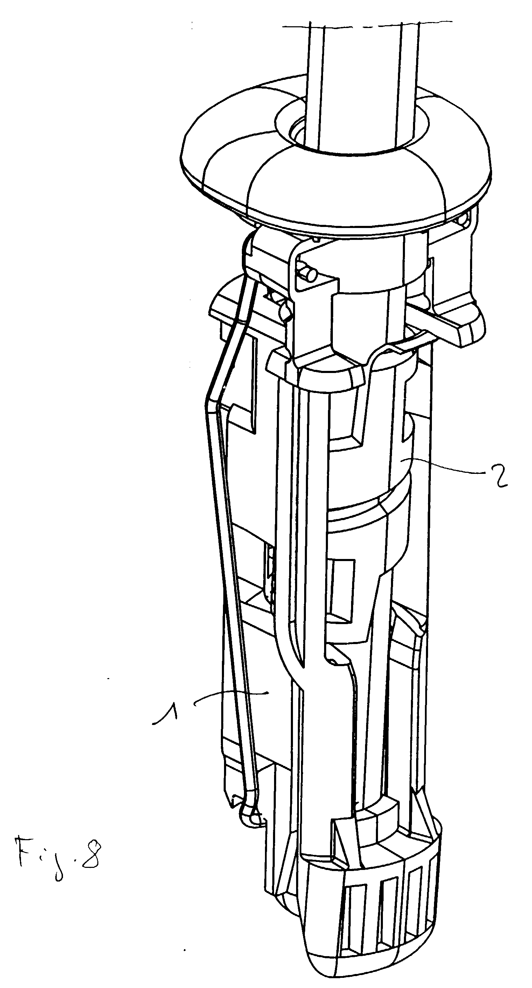

On a utilisé dans les figures 7 et 8 les mêmes références que précédemment pour les éléments homologues.

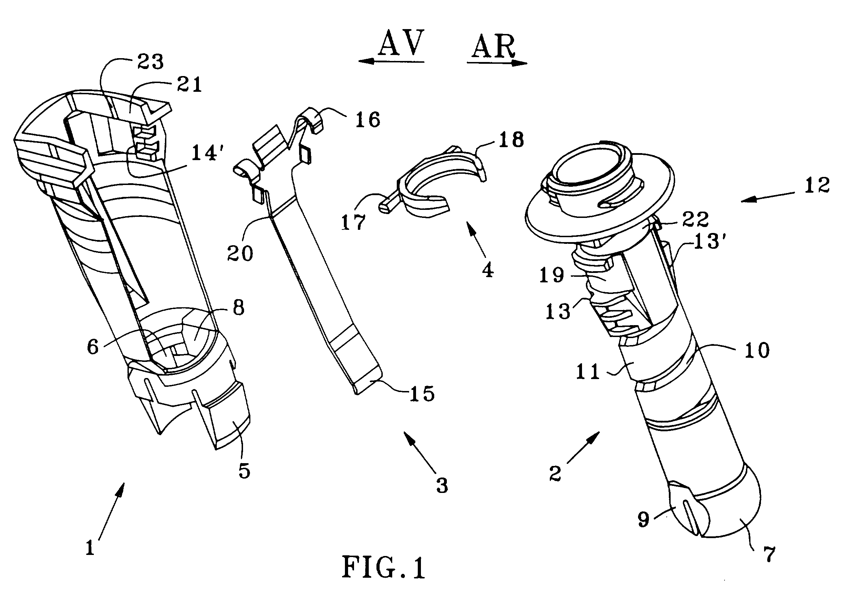

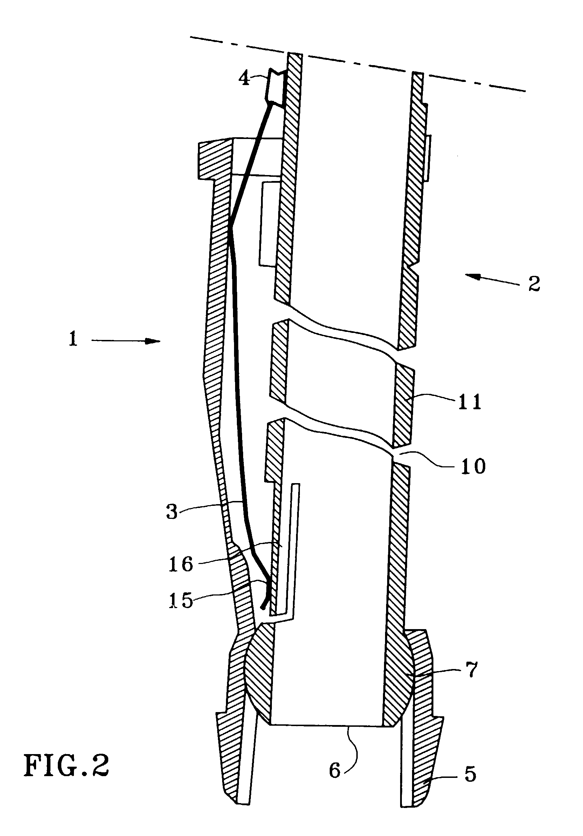

Le dispositif des figures 7 et 8 diffère de celui des figures 1 à 5 essentiellement par le fait que le fourreau 2 n'est pas monté dans la douille 1 par l'intermédiaire d'une rotule, mais qu'il est simplement libre dans le plan axial du siège. Le fourreau est par conséquent simplifié dans ce mode de réalisation.

Le fourreau est alors librement entraîné dans le plan axial par la broche qui peut pivoter dans ce plan.

On remarquera par ailleurs que les butées 13 et 13' se trouvent maintenant à la partie inférieure du fourreau, en dessous du ressort hélicoïdal 11. Le fonctionnement de ce dispositif est similaire à celui du dispositif des figures 1 à 5.

## Revendications

1. Dispositif de blocage en hauteur d'un appui-tête de siège, notamment de véhicule automobile, ledit appui-tête comprenant au moins une broche engagée dans une douille (1) solidaire de la structure dudit siège, caractérisé par le fait qu'il comprend un fourreau (2) disposé dans ladite douille pour recevoir ladite broche, ledit fourreau comportant au moins une zone centrale (11) déformable susceptible d'exercer sur la broche un effort de serrage fonction de la position angulaire relative de ses zones d'extrémité, et des moyens de commande (13, 13', 14, 14') pour faire varier ladite position angulaire relative en réponse à un déplacement de la broche dans un plan sensiblement parallèle au plan axial dudit siège.

2. Dispositif selon la revendication 1, dans lequel ledit fourreau (2) est monté dans ladite douille (1) rotatif dans ledit plan.

3. Dispositif selon l'une quelconque des revendications 1 et 2, dans lequel ladite zone centrale (11) comprend un ressort hélicoïdal.

4. Dispositif selon la revendication 3, dans lequel ledit fourreau (2) est réalisé en matière plastique injectée, ladite zone centrale (11) formant une bande matière enroulée en hélice.

5. Dispositif selon l'une quelconque des revendications 1 à 4, dans lequel au moins une desdites zones d'extrémité comprend des moyens d'engrènement (13, 13') agencés pour coopérer avec au moins une crémaillère (14, 14') solidaire de ladite douille.

6. Dispositif selon la revendication 5, dans lequel lesdits moyens d'engrènement (13, 13') et ladite crémaillère (14, 14') comprennent deux paires de butées agencées pour coopérer en sens inverse.

7. Dispositif selon l'une quelconque des revendications 1 à 6, comprenant des moyens élastiques (3) pour presser ledit fourreau contre une butée (14) de la douille agencée pour, en réaction, donner une valeur prédéterminée de fonctionnement normal à ladite position angulaire relative.

8. Dispositif selon l'une quelconque des revendications 1 à 7 comprenant des moyens de butée (23) escamotables pour ledit fourreau (2), correspondant à une position de réglage à l'écart d'une position de fonctionnement normal.

9. Dispositif selon la revendication 1, dans lequel ledit fourreau est monté dans ladite douille avec un jeu en translation dans ledit plan.
